(19) Europäisches Patentamt
European Patent Office
Office européen des brevets

(11) **EP 3 273 424 B1**

(12) **EUROPEAN PATENT SPECIFICATION**

(45) Date of publication and mention
of the grant of the patent:
**13.03.2019 Bulletin 2019/11**

(21) Application number: **16382356.0**

(22) Date of filing: **21.07.2016**

(51) Int Cl.:
*G06F 16/00* (2019.01)      *G08G 5/00* (2006.01)
*G06F 3/00* (2006.01)       *H04W 4/021* (2018.01)
*H04W 4/08* (2009.01)       *H04W 84/06* (2009.01)
*H04W 4/029* (2018.01)

(54) **SYSTEM AND METHOD OF AIRCRAFT SURVEILLANCE AND TRACKING**

SYSTEM UND VERFAHREN ZUR FLUGZEUGÜBERWACHUNG UND -VERFOLGUNG

SYSTÈME ET PROCÉDÉ DE SUIVI ET DE SURVEILLANCE D'UN AÉRONEF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.01.2018 Bulletin 2018/04**

(73) Proprietor: **The Boeing Company**
**Chicago, IL 60606-2016 (US)**

(72) Inventors:
• **TABOSO, PEDRO**
  **28042 MADRID (ES)**

• **RODRIGUEZ MONTEJANO, ROSA MARIA**
  **28042 MADRID (ES)**

(74) Representative: **Carvajal y Urquijo, Isabel et al
Clarke, Modet & Co.
Suero de Quiñones, 34-36
28002 Madrid (ES)**

(56) References cited:
**US-A1- 2005 173 594      US-A1- 2007 162 197
US-A1- 2008 004 792      US-A1- 2012 303 253
US-A1- 2013 124 089      US-A1- 2013 126 679
US-B1- 6 275 771         US-B1- 7 194 353
US-B1- 9 310 477**

## Description

## FIELD OF THE INVENTION

The present disclosure is comprised in the field of surveillance and tracking of aircraft.

## BACKGROUND OF THE INVENTION

Current air-traffic communication systems, such as primary and secondary radars, multilateration systems and Automatic Dependent Surveillance-Broadcast (ADS-B), present several limitations. First, these communication systems do not provide global coverage. Besides, current communication systems are close to saturation. For instance, ADS-B uses a lot of resources to transmit data to an airplane in an area of interest, rendering the 1090 MHz band close to saturation.

Furthermore, current communication systems will hardly be able to manage the expected growth of air traffic density for the upcoming years due to the rising number of unmanned aircraft vehicles (UAVs).

New technologies are arising to deal with the air traffic density growth. One of these emerging technologies is the Internet Protocol (IP)-based communication systems. Internet connectivity available onboard ("Internet onboard") is a new opportunity that provides global coverage. As this type of communication does not use traditional radio links (such as VHF or 1090MHz), but instead satellite link, the range of the system is not limited by the distance between emitter and receiver.

Through an IP-based communication link, an aircraft sends location data at a rate of twice per second (as current ADS-B). A ground-based server receives the location data, and sends back to the aircraft, information including location data of other airplanes located within a certain distance range. However, in order to determine the information to be sent back to each aircraft, the ground-based server needs to calculate the distance between every pair of airplanes registered. Since there are around twenty thousand concurrent flights, for each cycle (0.5 seconds) the server has to compute around 400 million distances. As these calculations are trigonometry-based, the server performance is overloaded, making the solution difficult to resolve.

Document US2012303253-A1 discloses an air traffic control system in which several tactical controllers collaboratively manage flights in neighbouring tactical sectors within the same planning sector, using tables for each tactical sector storing aircraft located in that sector to select which flights to display for each controller.

Therefore, there is a need to reduce the big amount of resources needed by the server to determine the information to be sent to each of the aircraft.

## SUMMARY OF THE INVENTION

The present disclosure refers to an aircraft surveillance and tracking system according to claims 9 to 11 of the appended claims and computer-implemented method according to claims 1 to 8 of the appended claims.

According to an embodiment of the method, the communication with the aircraft is preferably carried out based on Internet Protocol, using IP packets.

The aircraft data includes information about the aircraft position. Said position may comprise the primary identifier of the sector on which the aircraft is located and/or the latitude and longitude of the aircraft.

When the aircraft data includes a header of an IP packet, the information about the aircraft position may be incorporated into the source address field of the header. The source address field of the header preferably further includes a unique identifier.

In another embodiment, the version field of the header is preferably assigned a pre-established value different than the value assigned to IPv4 or IPv6. Upon reception of aircraft data from an aircraft, the method may comprise a prior step of checking if the version of the header coincides with said pre-established value.

The method may also comprise the steps of establishing multicast groups taking into account the source address of each aircraft, such that the aircraft belonging to the same multicast group are geographically located in the same sector; and transmitting to the aircraft of each multicast group, through multicast channels, the aircraft data stored in the table associated to the sector of the corresponding multicast group.

In order to establish a surveillance system where the information from/to aircraft is transmitted using the onboard available broadband internet connection, it is a priority to minimize the information exchanged between ground-based servers and aircraft, and to optimize the trigonometric calculation processes needed to determine the surrounding air traffic.

Some embodiments of the present invention deal with these two issues. An aircraft autonomously generates a geographically-based network identifier (similar to the IP address) and then, based on this identifier, the aircraft is automatically subscribed to a multicast channel where data of interest (surrounding aircraft, weather reports, etc.) is being transmitted.

The features, functions, and advantages that have been discussed can be achieved independently in various embodiments or may be combined in yet other embodiments further details of which can be seen with reference to the following description and drawings.

## BRIEF DESCRIPTION OF THE DRAWINGS

A series of drawings which aid in better understanding the invention and which are expressly related with an embodiment of said invention, presented as a non-limiting example thereof, are very briefly described below.

Figure 1 depicts the airspace sectorization.

Figure 2 illustrates the primary identifiers assigned to sectors.

Figure 3 shows the primary and secondary identifiers assigned to each sector.

Figure 4 depicts the differences in sectors size depending on latitude.

Figure 5 shows several examples, for different latitudes of a primary sector, of the surrounding sectors within the distance range of the primary sector.

Figure 6 shows the storing of aircraft data in the ground-based server.

Figures 7A and 7B depicts two different examples of the header of an IP packet including the aircraft IP address autonomously generated based on its geolocation.

Figure 8 shows an example of multicast channels and multicast groups.

Figure 9 depicts a schematic view of an aircraft surveillance and tracking system.

Figure 10 illustrates an embodiment of an onboard system for communicating aircraft data.

## DETAILED DESCRIPTION

The present disclosure refers to a method and system to optimize the performance of an aircraft surveillance system based on the secure air traffic data transfer through IP channels.

The aircraft surveillance method can be summarized with the following three steps:

1. Airspace sectorization: Split the airspace and implement a database based on that division with multiple tables, each table storing the information of the aircraft within the sector where it is located and the information of the aircraft within the surrounding sectors of interest (sectors within a determined distance range).
2. Provide an identifier to each aircraft based on its location.
3. Use multicast techniques to provide each aircraft with the information of the surrounding traffic.

The information of the surrounding traffic is provided to each aircraft by a ground-based server.

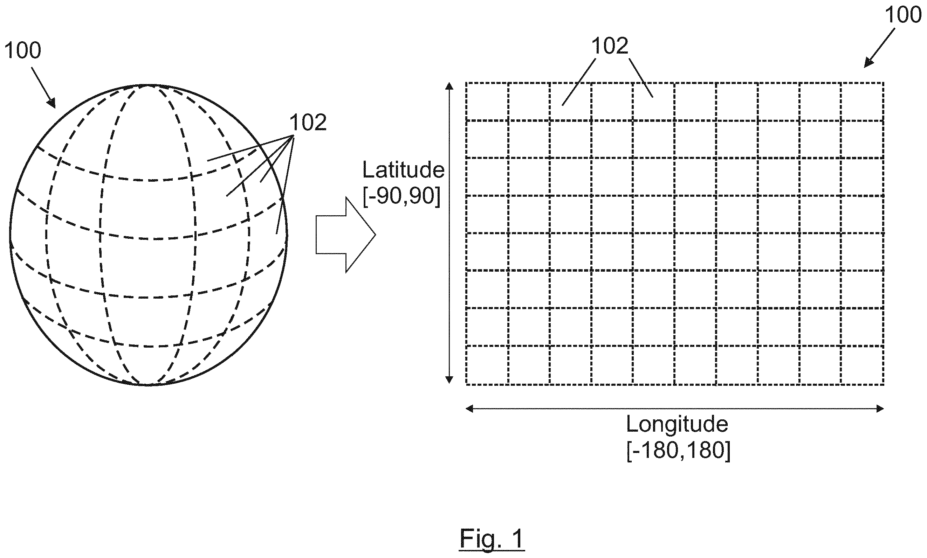

The first step of the method refers to the airspace sectorization, which includes decomposing an airspace region 100 into a plurality of sectors 102 based on the latitude and the longitude, as shown in **Figure 1.** The airspace region can be the global airspace region of the Earth or a portion thereof.

The range of current aircraft communication systems is limited by the attenuation of the signal transmitted and the sensitivity of the receiver, according to the following equation:

$$P_{RX} = P_{TX} - L$$

Where $P_{RX}$ is the power of the signal received (dBm), $P_{TX}$ is the power of the signal transmitted (dBm), and $L$ is the attenuation suffered by the signal (dB).

However, when using Internet Protocol (IP) techniques, there is no limitation based on the attenuation of the transmitted signal. A system using such IP techniques will have to deal with the information of each flying aircraft, independently of its location. In order to determine the information of interest to be sent to each of the aircraft, it is necessary to artificially limit the range of the system.

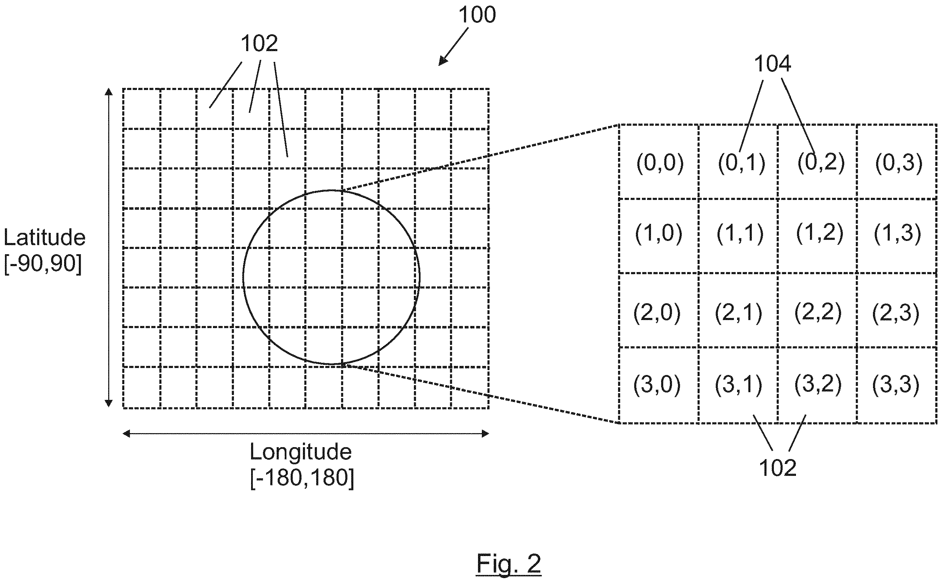

The present method is based on a sectorization of the airspace 100, wherein each of the sectors 102 of the grid is associated with a primary identifier 104 (shown in Figure 2), based on the latitude and longitude. **Figure 2** represents an example of assignment of primary identifiers 104 to sectors 102 of the airspace region 100.

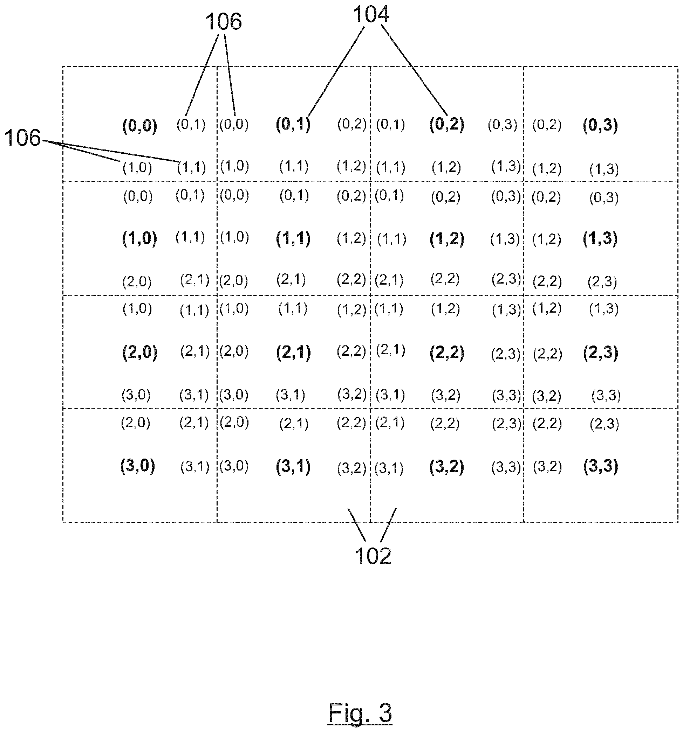

The method also assigns secondary identifiers to each of the sectors of the grid, based on the surrounding sectors. **Figure 3** depicts the example of Figure 2 with primary identifiers 104 (in the middle of each sector) and secondary identifiers 106 (in the periphery of each sector) assigned to each sector 102.

The purpose of the secondary identifiers 106 is to artificially establish the area or range of interest of each aircraft. As the surface of the sectors vary based on the latitude and longitude, in order to establish a distance range (e.g. 120 nautical miles) not all the sectors 102 have the same number of secondary identifiers 106.

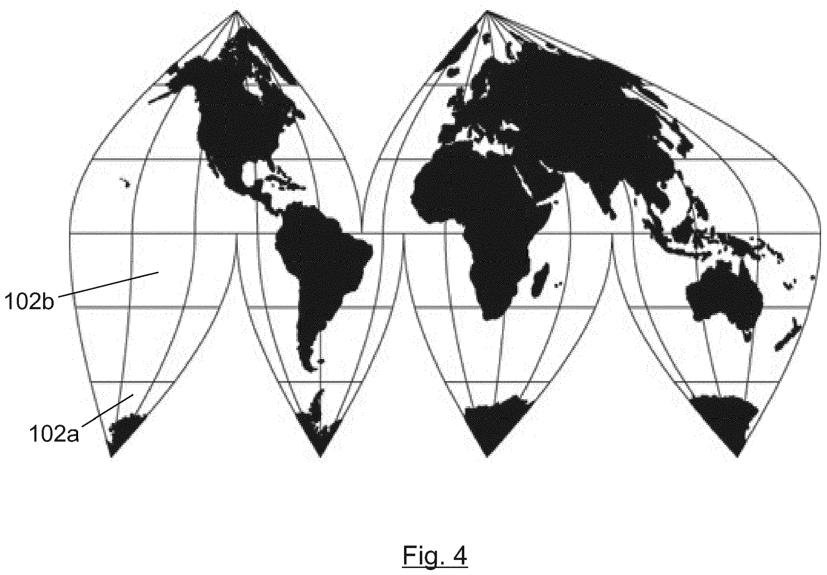

**Figure 4** depicts the different size of the sectors 102 depending on latitude. Near the poles the sectors 102a are smaller; however, next to the equator the sectors 102b are much larger. Therefore, an aircraft flying in a given sector 102a near the poles will need a larger number of surrounding sectors in order to obtain from the server the air traffic in the distance range. On the contrary, an aircraft flying in a given sector 102b near the equator will need a smaller number of surrounding sectors to obtain from the server the air traffic in the same distance range, which is normally set to around 120 nautical miles.

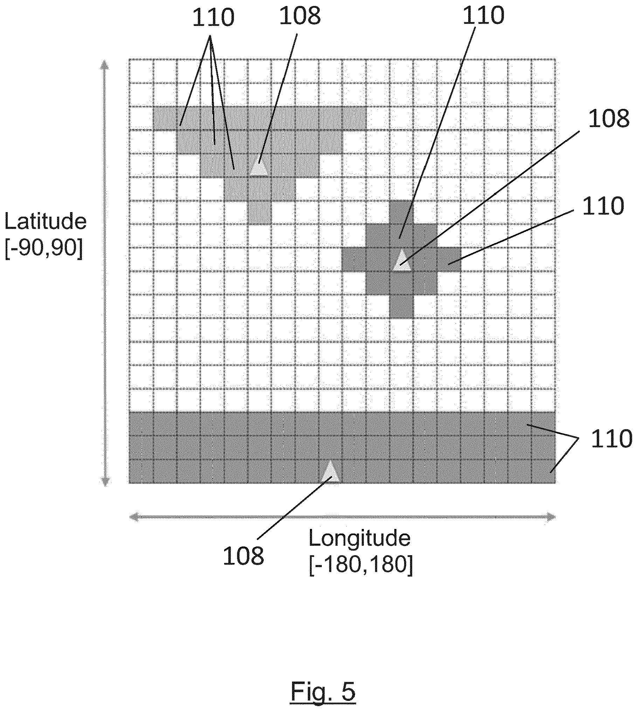

**Figure 5** shows several examples of different number of surrounding sectors 110 within the distance range of a primary sector 108 where the aircraft (marked with a triangle) is located. In order to establish a determined distance range to cover, the number of surrounding sectors 110 of interest depends on the location of the aircraft, and more particularly on the latitude of the primary sector 108 where the aircraft is located. As shown in Figure 5 the number of surrounding sectors 110 within the distance range is much larger when the primary sector is located near the pole.

Therefore, as represented in Figure 3, each sector 102 has associated a primary identifier 104 (which is unique and may be based on the longitude and latitude of the sector) and a plurality of secondary identifiers 106 to cover a distance range (120 nautical miles for a system equivalent to ADS-B). The method comprises determining, for each of the sectors 102, the surrounding sectors 110 located within the distance range. The method further comprises associating each of the sectors 102 with the secondary identifiers 106. The secondary identifiers 106 correspond to the primary identifiers 104 of the surrounding sectors 110 located within the distance range to the corresponding sector 102.

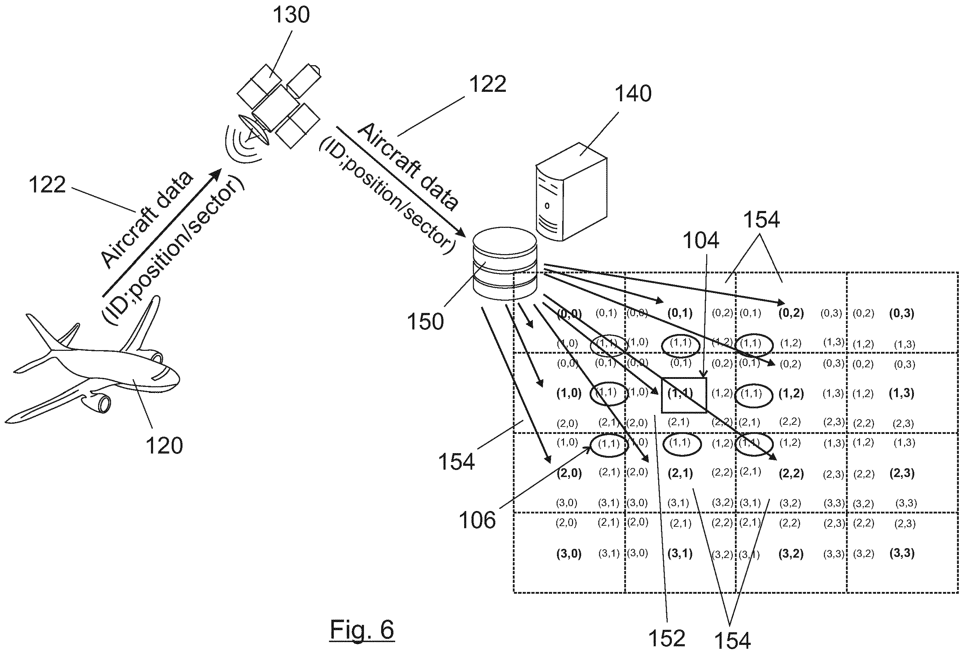

**Figure 6** shows the storing of information in a database 150 of a ground-based server 140. An aircraft 120 determines its position using instruments onboard (e.g. geographical coordinates obtained by a global navigation satellite system (GNSS) receiver). The aircraft 120 sends data 122 including an aircraft identifier and the aircraft position using the internet connection onboard through a satellite 130.

The server 140 receives the aircraft data and, based on the aircraft location, records the information in a database 150. The server 140 obtains, using the aircraft position, the sector 102 on which the aircraft is currently located. Alternatively, the aircraft data may include information with the sector 108 on which the aircraft 120 is located, obtained by the aircraft 120 using a correlating table.

The server 140 stores the aircraft data in a table 152 correspondent with the sector 108 where the aircraft 120 is located, sector with primary identifier (1,1) in the example of Figure 6. Moreover, the aircraft data is also stored in the tables 154 correspondent with the surrounding sectors 110 located within the distance range, in the example of Figure 6 the surrounding sectors are those with secondary identifier (1,1).

Therefore, the database 150 stores the information in one table per sector, each table being associated with the primary identifier 104. When information from an aircraft 120 is received, the data is stored not only in the table 152 associated to the sector 108 where the aircraft is located, but also in the tables 154 associated to the surrounding sectors 110 within the distance range, the surrounding sectors 110 having a secondary identifier 106 equal to the primary identifier 104 of the sector 108 where the aircraft 120 is located. In the case represented in Figure 6, the data is stored in the table 152 with primary identifier (1,1) and in the tables 154 of the surrounding sectors 110 having the secondary identifier (1,1).

The method also comprises providing an aircraft identifier to each aircraft. In the present IP-based communication, aircraft IP address is autonomously and dynamically generated based on geolocation.

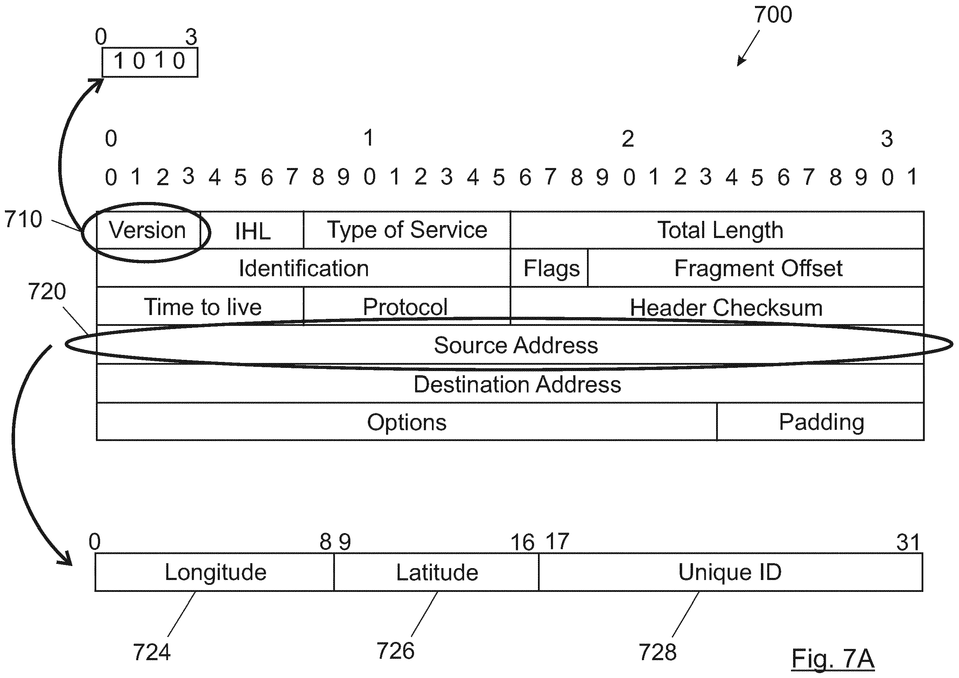

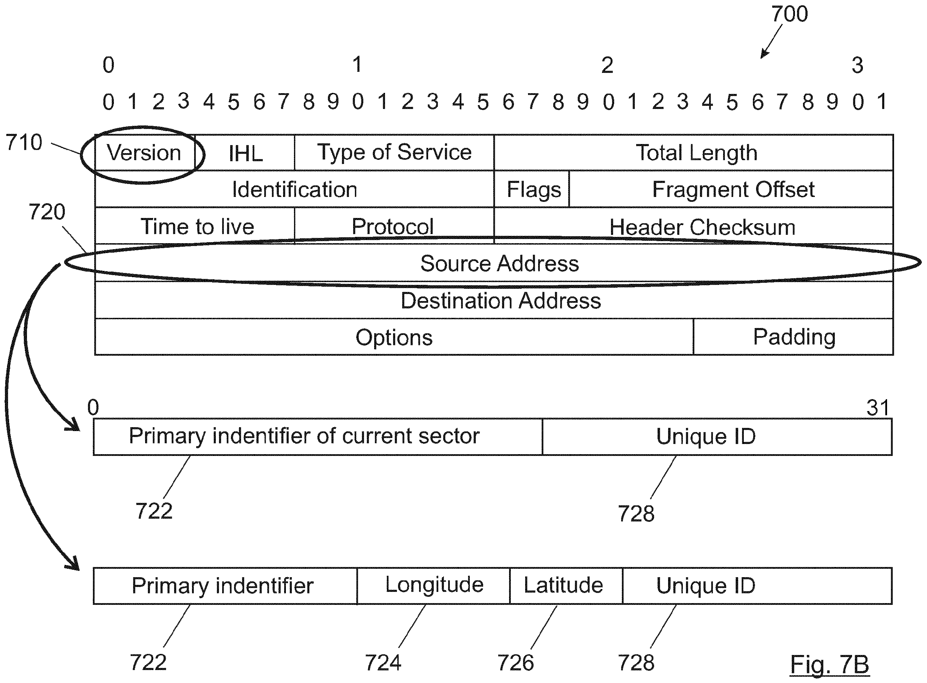

The header 700 of an IP packet, as depicted in the examples of **Figures 7A** and **7B**, includes the following customized fields:

- Version 710: The first header field in an IP packet is the four-bit version field. This field is used to indicate the format of the IP header (e.g. for IPv4, this has a value of 4). Any available value (such as a value of 10) may be used for this field to indicate that the format of the IP packet is the one used in the present IP-based protocol. Knowing the IP protocol used, the receiver will be able to interpret the customized fields of the IP packets.

- Source address 720: This field is the address of the sender of the IP packet. According to a first embodiment of the IP-based protocol shown in Figure 7A, the source address field contains the following data:

  • Bits 0 - 8: The integer value of the current longitude 724 of the aircraft 120 is coded in the first nine bits. It may include longitude values within [-180, 180].

  • Bits 9 - 16: The integer value of the current latitude 726 of the aircraft 120 is included in the following eight bits. It may include latitude values within [-90, 90].

  • Bits 17 - 31: A randomly generated value, unique identifier 728, is included here. It helps to establish a unique source IP address. A new value may be generated when the longitude 724 and/or the latitude 726 change.

According to another embodiment, shown in Figure 7B, instead of including the longitude 724 and latitude 726 of the aircraft 120, the source address 720 may include a prefix or first sub-field 722 with the primary identifier 104 of the current sector 108 where the aircraft 120 is located, along with the unique identifier 728. Alternatively, as shown below, the source address 720 may include a first sub-field 722 with the primary identifier 104 of the sector 108 where the aircraft 120 is located, in addition to the longitude 724 and latitude 726 of the aircraft 120 and the unique identifier 728. To obtain the content of the first sub-field 722, a control module installed onboard may access a local database to retrieve the primary identifier 104 of the sector 108 corresponding to the current position (longitude and latitude) of the aircraft 120.

In the embodiments of Figures 7A and 7B different sizes in bits for the sub-fields of the source address 720 (primary identifier 722, longitude 724, latitude 726, unique identifier 728) may be envisaged.

This IP-based protocol enables the ground-based server 140, by analyzing the source address field 720 of the IP header 700 received, to determine where (i.e. in which tables) to store the information sent by each aircraft 120.

The IP header 700 also allows grouping the surrounding aircraft by IP address. In the embodiments of Figure 7B, all of the aircraft within the same sector will share the first sub-field 722 (containing the primary identifier 104 of the current sector 108) of the source address 720. For the embodiment of Figure 7A, if the sectors 102 are defined with a size of 1º latitude x 1º longitude, every aircraft within the same sector will share the first two sub-fields (724,726) of the source address 720. This feature is extremely useful to determine multicast groups.

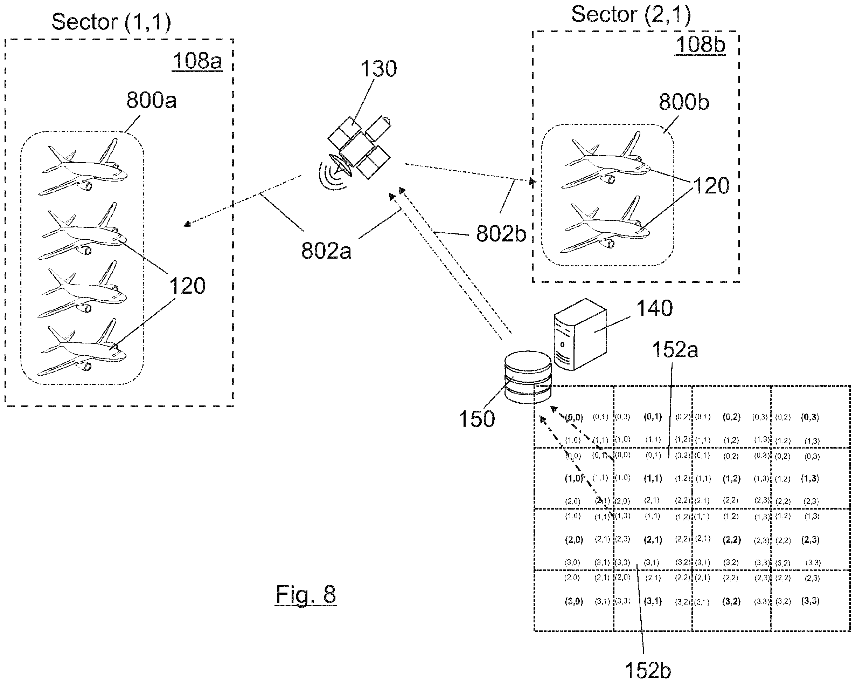

According to the embodiment of **Figure 8**, the information received by the server 140 may be distributed back to the aircraft 120 by means of multicast groups (800a, 800b). Multicasting groups (800a, 800b) are established taking into account the IP address of the aircraft. All of the aircraft 120 within the same sector (108a, 108b) share the first sub-field 722 of the source address 720 according to the embodiment of Figure 7B (or the first 17 bits corresponding to the longitude 724 and latitude 726 in the embodiment of Figure 7A), and will therefore receive the same information each cycle. This feature drastically reduces the calculations to be performed by the server 140, as well as the number of IP packets to be sent.

All of the aircraft 120 belonging to the same multicast group (800a, 800b) are geographically located in the same sector (108a, 108b). Each multicast group (800a, 800b) corresponds to a different sector (108a, 108b). Different multicast channels (802a, 802b) are established to distribute the information stored in the table (152a, 152b) of the database 150 corresponding to the sector (108a, 108b) of the multicast group (800a, 800b).

Information is sent to the aircraft using the internet connection onboard. Each aircraft receives only the information of interest associated to the sector on which the aircraft is located, the being data sent through the multicast channel the aircraft belongs to.

This way, the server 140 acts as a first filter of the information. In the example of Figure 8, all of the aircraft 120 flying in a first sector 108a, sector (1,1), will receive the same data, the information stored in the table 152a associated to the sector (1,1), having as primary identifier (1,1), thus including the aircraft data 122 (e.g. aircraft identifier and aircraft position) of all aircraft flying in sectors {(0,0), (0,1), (0,2), (1,0), (1,1), (1,2), (2,0), (2,1), (2,2)}. Similarly, the server 140 sends the same data to all the aircraft 120 flying in a second sector 108b, sector (2,1): the information stored in the table 152b associated to the sector (2,1), having as primary identifier (2,1), and therefore including the aircraft data 122 of all the airplanes flying in sectors {(1,0), (1,1), (1,2), (2,0), (2,1), (2,2), (3,0), (3,1), (3,2)}.

Once an aircraft 120 receives from the server 140 the identifier and position of the airplanes flying in its sector (108) and the surrounding sectors (110) within the distance range, said aircraft 120 then computes the distance to all these airplanes. Trigonometric calculations are therefore performed by the client, the aircraft 120, over a very limited number of airplanes (only over those within a determined range). Therefore, trigonometric calculations performed by the server 140 are greatly reduced, optimizing the performance and avoiding saturation of the server 140.

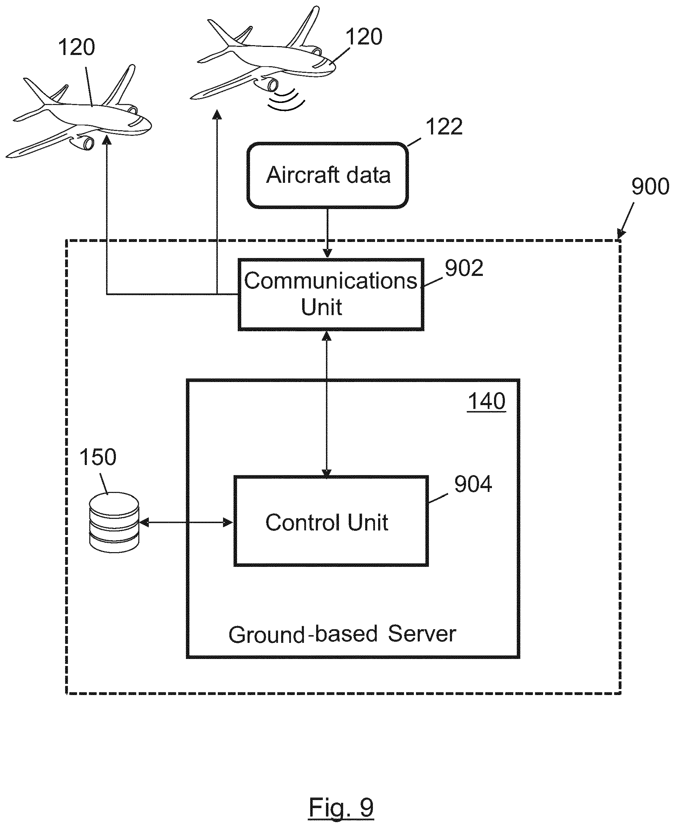

An embodiment of an aircraft surveillance and tracking system 900, implementing the method previously described, is depicted in **Figure 9.** The system 900 comprises a communications unit 902, a ground-based server 140 and one or more database 150. The communications unit 902 is configured for receiving and sending aircraft data 122 from/to one or more aircraft 120.

The ground-based server 140 comprises a control unit 904. When aircraft data 122 from an aircraft 120 is received, the control unit 904 determines the primary identifier 104 of the sector 108 on which the aircraft 120 is located and stores the aircraft data 122 on the database 150. In particular, the information is stores on a table 152 associated to the sector 108 having said primary identifier 104 and on each of the tables 154 associated to surrounding sectors 110 having a secondary identifier 106 correspondent with said primary identifier 104.

The communications unit 902 repeatedly transmits to each aircraft 120 the aircraft data stored in the table 152 associated to the sector 108 on which the corresponding aircraft 120 is located.

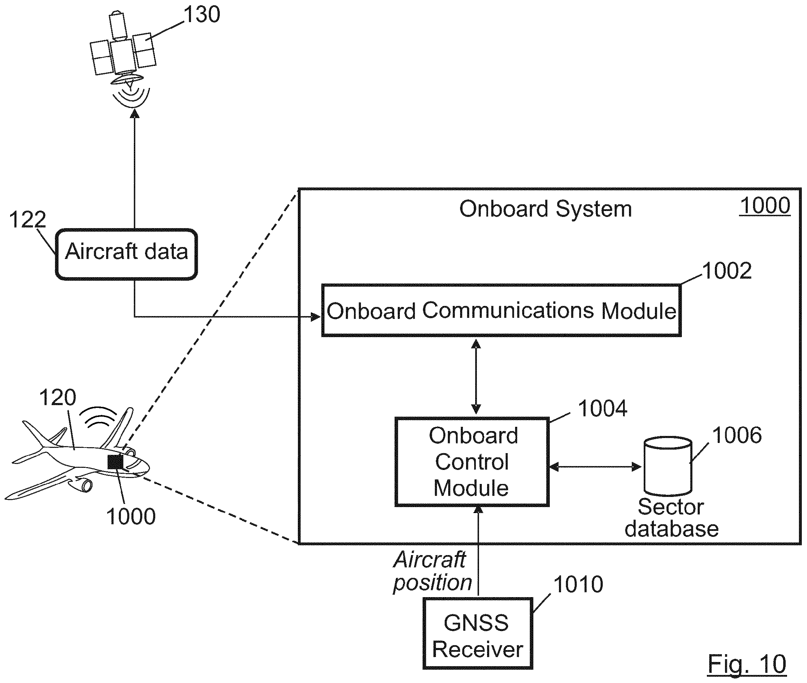

**Figure 10** depicts an embodiment of an onboard system 1000, installed on an aircraft 120, for communicating aircraft data for aircraft surveillance and tracking. The onboard system 1000 may be part of the Flight Management System (FMS) or a separate entity. The onboard system 1000 comprises an onboard communications module 1002 and an onboard control module 1004.

The onboard control module 1004 retrieves information about the position of the aircraft 120. In particular, the onboard control module 1004 obtains the aircraft position (longitude, latitude) from a relevant avionics system (such as GNSS receiver 1010). The onboard control module 1004 may also obtain the primary identifier 104 of the sector 108 corresponding to the current aircraft position by accessing a sector database 1006 storing the correspondence between the coordinates of the aircraft (longitude and latitude) and sectors 102. The information about the position of the aircraft 120 may comprise the aircraft position (longitude, latitude) and/or the primary identifier 104 of the sector 108 on which the aircraft 120 is located.

The onboard control module 1004 then generates a header 700 of an IP packet. The header 700 comprises a version 710 field with an assigned pre-established value different than the value assigned to IPv4 or IPv6 and a source address 720 field including the retrieved information about the position of the aircraft 120. The onboard control module 1004 generates aircraft data 122 comprising at least one IP packet with the previously generated header 700 and sends the generated aircraft data 122 through the onboard communications module 1002.

The onboard control module 1004 may also receive, originating from the server 140, IP packets with aircraft data corresponding to other aircraft located on the same sector 108 and on the surrounding sectors 110 within the distance range. For each IP packet received, the onboard control module 1004 checks if the version 710 of the header 700 coincides with the pre-established value, and then extracts the position of all the surrounding aircraft included in the IP packets. Finally, the onboard control module 1004 computes the distance to each individual aircraft. This way the load and data processing of the ground-based server 140 is drastically reduced.

## Claims

1. A computer-implemented method of aircraft surveillance and tracking, comprising:

   - decomposing an airspace region (100) into a plurality of sectors (102);
   - associating each of the sectors (102) with a primary identifier (104);
   - determining a distance range;
   - for each of the sectors (102), determining surrounding sectors (110) located within the distance range;
   - further associating each of the sectors (102) with secondary identifiers (106), wherein the secondary identifiers (106) correspond to the primary identifiers (104) of the surrounding sectors (110) located within the distance range;
   - upon reception, by a ground-based server (140), of aircraft data (122) including an aircraft identifier and position sent from a first aircraft (120):

      determining the primary identifier (104) of a sector (108) on which said first aircraft (120) is located;
      storing the aircraft data (122) of said first aircraft on a table (152) associated to the sector (108) having said primary identifier (104);
      further storing the aircraft data (122) of said first aircraft on each of the tables (154) associated to the surrounding sectors (110) having a secondary identifier (106) correspondent with said primary identifier (104);

   - upon said reception, sending, by the ground-based server to one or more second aircraft and receiving by said one or more second aircraft (120), aircraft data stored in the table (152) associated to the same sector (108) on which said one or more second aircraft (120) is located sent by the ground-based server (140) including aircraft identifier and position corresponding to other aircraft located on said same sector (108) and on the surrounding sectors (110) within the distance range from said same sector (108);
   - computing, by said one or more second aircraft (120), the distance to each of said other aircraft.

2. The method of claim 1, wherein communication with the aircraft (120) is based on Internet Protocol.

3. The method of any preceding claim, wherein the aircraft data (122) comprises the primary identifier (104) of the sector (108) on which the aircraft (120) is located.

4. The method of any preceding claim, wherein the aircraft position comprises the latitude (724) and longitude (726) of the aircraft (120).

5. The method of any preceding claim, wherein the aircraft data (122) comprises a header (700) of an IP packet, and wherein the aircraft position is included in a source address (720) field of the header (700).

6. The method of claim 5, wherein the source address (720) field of the header (700) further includes a unique identifier (728).

7. The method of any of claims 5 to 6, wherein the version (710) field of the header (700) is assigned a pre-established value different than the value assigned to IPv4 or IPv6, and wherein the method comprises, upon reception of aircraft data (122) from the aircraft (120), a prior step of checking if the version (710) of the header (700) coincides with said pre-established value.

8. The method of any of claims 5 to 7, further comprising:

      establishing multicast groups (800a, 800b) taking into account the source address (720) of each aircraft (120), such that the aircraft (120) belonging to the same multicast group (800a, 800b) are geographically located in the same sector (108a, 108b);
      transmitting to the aircraft (120) of each multicast group (800a, 800b), through multicast channels (802a, 802b), the aircraft data (122) stored in the table (152a, 152b) associated to the sector (108a, 108b) of the corresponding multicast group (800a, 800b).

**9.** A system of aircraft surveillance and tracking, wherein the airspace region (100) is divided into a plurality of sectors (102), each sector (102) being associated with a primary identifier (104) and secondary identifiers (106), wherein the secondary identifiers (106) correspond to the primary identifiers (104) of surrounding sectors (110) located within a determined distance range; the system (900) comprising:

- a database (150);
- a communications unit (902) configured for receiving aircraft data (122) including aircraft identifier and position sent from one or more aircraft (120);
- a ground-based server (140) with a control unit (904) configured for:

upon reception of aircraft data (122) including an aircraft identifier and position sent from a first aircraft (120):

• determining the primary identifier (104) of the sector (108) on which said first aircraft (120) is located;
• storing the aircraft data (122) on a table (152) of the database (150) associated to the sector (108) having said primary identifier (104);
• further storing the aircraft data (122) on each of the tables (154) of the database (150) associated to surrounding sectors (110) having a secondary identifier (106) correspondent with said primary identifier (104);
• sending to one or more second aircraft (120), through the communications unit (902), aircraft data stored in the table (152) associated to the same sector (108) on which said one or more second aircraft (120) is located;

- an onboard system (1000), installed on said one or more second aircraft (120), comprising an onboard communications module (1002) and an onboard control module (1004) configured for:

receiving, by said one or more second aircraft (120), said aircraft data stored in the table (152) associated to said same sector (108) on which said one or more second aircraft (120) is located sent by the ground-based server (140) including aircraft identifier and position corresponding to other aircraft located on said same sector (108) and on the surrounding sectors (110) within the distance range from said same sector (108); computing the distance to each of said other aircraft.

**10.** A system of claim 9, wherein the communication with the aircraft (120) is based on Internet Protocol.

**11.** The system of claim 10, wherein the control unit (904) is configured to send the aircraft data to multicast groups (800a, 800b) through multicast channels (802a, 802b), wherein all the aircraft (120) belonging to the same multicast group (800a, 800b) are geographically located in the same sector (108a, 108b), and wherein the aircraft data for each multicast group (800a, 800b) is stored in the table (152a, 152b) associated to the sector (108a, 108b) of the corresponding multicast group (800a, 800b).

**Patentansprüche**

**1.** Computerimplementiertes Verfahren zur Flugzeugüberwachung und - verfolgung, umfassend:

- Zerlegen eines Luftraumbereichs (100) in eine Vielzahl von Sektoren (102);
- Zuordnen jedes der Sektoren (102) mit einer primären Kennung (104);
- Bestimmen eines Abstandsbereichs;
- für jeden der Sektoren (102), Bestimmen umgebender Sektoren (110), die sich innerhalb des Abstandsbereichs befinden;
- weiter Verknüpfen jedes der Sektoren (102) mit einer sekundären Kennung (106), wobei die sekundären Kennungen (106) den primären Kennungen (104) der umgebenden Sektoren (110) entsprechen, die innerhalb des Abstandsbereichs angeordnet sind;
- bei Empfang eines bodengestützten Servers (140) von Flugzeugdaten (122), einschließlich einer Flugzeugkennung und Position, die von einem ersten Flugzeug (120) gesendet werden:

Bestimmen der primären Kennung (104) eines Sektors (108), in dem sich das erste Flugzeug (120) befindet;
Speichern der Flugzeugdaten (122) des ersten Flugzeugs in einer Tabelle (152), die dem Sektor (108) mit der primären Kennung (104) zugeordnet ist;
weiter Speichern der Flugzeugdaten (122) des ersten Flugzeugs in jeder Tabelle (154), die den umgebenden Sektoren (110) zugeordnet ist, die eine sekundäre Kennung (106) aufweisen, die der primären Kennung (104) entspricht;

- bei Empfang, Senden durch den bodengestützten Server an eines oder mehrere zweite Flugzeuge und Empfangen durch das eine oder die mehreren zweiten Flugzeuge (120) von Flugzeugdaten, die in der Tabelle (152) gespeichert sind, die demselben Sektor (108) zugeordnet sind, in dem sich eines oder mehrere zweite Flugzeuge (120) befinden, die durch den bodengestützten Server (140) gesendet werden, die Flugzeugkennung und -position aufweisen, die dem anderen Flugzeug entsprechen, das sich in demselben Sektor (108) und in den umgebenden Sektoren (110) innerhalb des Abstandbereichs von demselben Sektor (108) befinden;

- Berechnen, durch eines oder mehrere zweite Flugzeuge (120), des Abstands zu jedem anderen Flugzeug.

2. Verfahren nach Anspruch 1, wobei die Kommunikation mit dem Flugzeug (120) auf einem Internetprotokoll basiert.

3. Verfahren nach einem der vorhergehenden Ansprüche, wobei die Flugzeugdaten (122) die primäre Kennung (104) des Sektors (108), in dem sich das Flugzeug (120) befindet, umfassen.

4. Verfahren nach einem der vorhergehenden Ansprüche, wobei die Flugzeugposition den Breitengrad (724) und den Längengrad (726) des Flugzeugs (120) umfasst.

5. Verfahren nach einem der vorhergehenden Ansprüche, wobei die Flugzeugdaten (122) einen Header (700) eines IP-Pakets umfassen und wobei die Flugzeugposition in einem Quelladressenfeld (720) des Headers (700) enthalten ist.

6. Verfahren nach Anspruch 5, wobei das Quelladressenfeld (720) des Headers (700) ferner eine eindeutige Kennung (728) aufweist.

7. Verfahren nach einem der Ansprüche 5 bis 6, wobei das Versionsfeld (710) des Headers (700) einem vorab festgelegten Wert zugeordnet ist, bei dem es sich nicht um den Wert handelt, welcher der IPv4 oder IPv6 zugeordnet ist, und wobei das Verfahren umfasst: bei Empfang von Flugzeugdaten (122) vom Flugzeug (120), einen vorherigen Schritt des Prüfens, ob die Version (710) des Headers (700) mit dem vorab festgelegten Wert übereinstimmt.

8. Verfahren nach einem der Ansprüche 5 bis 7, ferner umfassend:

Einrichten von Multicast-Gruppen (800a, 800b) unter Berücksichtigung der Quelladresse (720) jedes Flugzeugs (120), so dass sich das Flugzeug (120), das zu derselben Multicast-Gruppe (800a, 800b) gehört, geographisch im selben Sektor (108a, 108b) befindet;

Übertragen, an das Flugzeug (120) jeder Multicast-Gruppe (800a, 800b) über Multicast-Kanäle (802a, 802b), von Flugzeugdaten (122), die in der Tabelle (152a, 152b) gespeichert sind, die dem Sektor (108a, 108b) der entsprechenden Multicast-Gruppe (800a, 800b) zugeordnet ist.

9. System der Flugzeugüberwachung und -verfolgung, wobei der Luftraumbereich (100) in eine Vielzahl von Sektoren (102) eingeteilt ist, jeder Sektor (102) einer primären Kennung (104) und sekundären Kennungen (106) zugeordnet ist, wobei die sekundären Kennungen (106) den primären Kennungen (104) der umgebenden Sektoren (110) entsprechen, die sich innerhalb eines bestimmten Abstandsbereichs befinden; wobei das System (900) umfasst:

- eine Datenbank (150);
- eine Kommunikationseinheit (902), die zum Empfangen von Flugzeugdaten (122) konfiguriert ist, einschließlich einer Flugzeugkennung und einer von einem oder mehreren Flugzeugen (120) gesendeten Position;
- einen bodengestützten Server (140) mit einer Steuereinheit (904), der bei Empfang von Flugzeugdaten (122), einschließlich einer Flugzeugkennung und Position, die von einem ersten Flugzeug (120) gesendet werden, konfiguriert ist zum:

• Bestimmen der primären Kennung (104) des Sektors (108), in dem sich das erste Flugzeug (120) befindet;
• Speichern der Flugzeugdaten (122) in einer Tabelle (152) der Datenbank (150), die dem Sektor (108) mit der primären Kennung (104) zugeordnet ist;
• weiter Speichern der Flugzeugdaten (122) in jeder der Tabellen (154) der Datenbank (150), die den umgebenden Sektoren (110) zugeordnet sind, die eine sekundäre Kennung (106) aufweisen, die der primären Kennung (104) entspricht;
• Senden, an eines oder mehrere Flugzeuge (120) durch die Kommunikationseinheit (902), von Flugzeugdaten, die in der Tabelle (152) gespeichert sind, die demselben Sektor (108) zugeordnet sind, in dem sich das eine oder die mehreren Flugzeuge (120) befinden;

- ein Bordsystem (1000), das in einem oder mehreren zweiten Flugzeugen (120) installiert ist, umfassend ein bordinternes Kommunikationsmodul (1002) und eines bordinternen Steuermoduls (1004), die konfiguriert sind zum:

Empfangen, durch das eine oder die mehreren zweiten Flugzeuge (120), von Flugzeugdaten, die in der Tabelle (152) gespeichert sind, die demselben Sektor (108) zugeordnet sind, in dem sich eines oder mehrere zweite Flugzeuge (120) befinden, die durch den bodengestützten Server (140) gesendet werden, die Flugzeugkennung und -position aufweisen, die dem anderen Flugzeug entsprechen, das sich in demselben Sektor (108) und in den umgebenden Sektoren (110) innerhalb des Abstandbereichs von demselben Sektor (108) befinden;

Berechnen des Abstands zu jedem der anderen Flugzeuge.

**10.** System nach Anspruch 9, wobei die Kommunikation mit dem Flugzeug (120) auf einem Internetprotokoll basiert.

**11.** System nach Anspruch 10, wobei die Steuereinheit (904) zum Senden von Flugzeugdaten an Multicast-Gruppen (800a, 800b) über Multicast-Kanäle (802a, 802b) konfiguriert ist,

wobei sich alle Flugzeuge (120), die zu derselben Multicast-Gruppe (800a, 800b) gehören, geografisch in demselben Sektor (108a, 108b) befinden, und wobei die Flugzeugdaten jeder Multicast-Gruppe (800a, 800b) in der Tabelle (152a, 152b) gespeichert sind, die dem Sektor (108a, 108b) der entsprechenden Multicast-Gruppe (800a, 800b) zugeordnet sind.

## Revendications

**1.** Procédé mis en oeuvre par ordinateur de surveillance et de suivi d'aéronef, comprenant :

- la décomposition d'une région de l'espace aérien (100) en une pluralité de secteurs (102) ;
- l'association de chacun des secteurs (102) à un premier identifiant (104) ;
- la détermination d'une plage de distance ;
- pour chacun des secteurs (102), la détermination de secteurs environnants (110) situés dans la plage de distance ;
- l'association supplémentaire de chacun des secteurs (102) à des identifiants secondaires (106), dans laquelle les identifiants secondaires (106) correspondent aux identifiants primaires (104) des secteurs environnants (110) situés dans la plage de distance ;
- après la réception, par un serveur basé au sol (140), de données de l'aéronef (122) comportant l'identifiant et la position de l'aéronef envoyés depuis un premier aéronef (120) :

la détermination de l'identifiant primaire (104) d'un secteur (108) sur lequel ledit premier aéronef (120) est situé ;
le stockage de données de l'aéronef (122) dudit premier aéronef sur un tableau (152) associé au secteur (108) ayant ledit premier identifiant (104) ;
le stockage supplémentaire des données de l'aéronef (122) dudit premier aéronef sur chacun des tableaux (154) associés aux secteurs environnants (110) ayant un identifiant secondaire (106) correspondant audit identifiant primaire (104) ;

- après ladite réception, l'envoi, par le serveur basé au sol à un ou plusieurs deuxièmes aéronefs et la réception par lesdits un ou plusieurs deuxièmes aéronefs (120), de données de l'aéronef stockées dans le tableau (152) associé aux même secteur (108) où ledit un ou plusieurs deuxièmes aéronefs (120) sont localisés envoyées par le serveur basé au sol (140) comportant l'identifiant et la position de l'aéronef correspondant à un autre aéronef situé dans ledit même secteur (108) et dans les secteurs environnants (110) dans la plage de distance dudit même secteur (108) ;
- le calcul, par lesdits un ou plusieurs deuxièmes aéronefs (120), la distance à chacun desdits autres aéronefs.

**2.** Procédé selon la revendication 1, dans lequel la communication avec l'aéronef (120) est basée sur le Protocole Internet.

**3.** Procédé selon l'une quelconque des revendications précédentes, dans lequel les données de l'aéronef (122) comprennent l'identifiant primaire (104) du secteur (108) sur lequel l'aéronef (120) est situé.

**4.** Procédé selon l'une quelconque des revendications précédentes, dans lequel la position de l'aéronef comprend la latitude (724) et la longitude (726) de l'aéronef (120).

**5.** Procédé selon l'une quelconque des revendications précédentes, dans lequel les données de l'aéronef (122) comprennent une en-tête (700) d'un paquet IP, et dans lequel la position de l'aéronef est incluse dans un champ d'adresse source (720) de l'en-tête (700).

**6.** Procédé selon la revendication 5, dans lequel le champ d'adresse source (720) de l'en-tête (700) comporte en outre un unique identifiant (728).

**7.** Procédé selon l'une quelconque des revendications 5 à 6, dans lequel le champ de version (710) de l'en-tête (700) est assigné à une valeur préétablie différente de la valeur assignée à IPv4 ou IPv6, et dans lequel le procédé comprend, après la réception de données de l'aéronef (122) depuis l'aéronef (120), une étape préalable consistant à vérifier si la version (710) de l'en-tête (700) coïncide avec ladite valeur préétablie.

**8.** Procédé selon l'une quelconque des revendications 5 à 7, comprenant en outre :

l'établissement de groupes de multidiffusion (800a, 800b) en prenant en compte l'adresse source (720) de chaque aéronef (120), tel que l'aéronef (120) appartenant au même groupe de multidiffusion (800a, 800b) soit géographiquement situé dans le même secteur (108a, 108b) ; la transmission à l'aéronef (120) de chaque groupe de multidiffusion (800a, 800b), par des canaux de multidiffusion (802a, 802b), des données de l'aéronef (122) stockées dans le tableau (152a, 152b) associé au secteur (108a, 108b) du groupe de multidiffusion correspondant (800a, 800b).

**9.** Système de surveillance et de suivi d'aéronef, dans lequel la région de l'espace aérien (100) est divisée en une pluralité de secteurs (102), chaque secteur (102) étant associé à un identifiant primaire (104) et à des identifiants secondaires (106), dans lequel les identifiants secondaires (106) correspondent aux identifiants primaires (104) de secteurs environnants (110) situés dans une plage de distance déterminée ; le système (900) comprenant :

- une base de données (150) ;
- une unité de communication (902) configurée pour recevoir des données de l'aéronef (122) comportant l'identifiant et la position de l'aéronef envoyés depuis un ou plusieurs aéronefs (120) ;
- un serveur basé au sol (140) avec une unité de commande (904) configurée pour :

après la réception de données de l'aéronef (122) comportant un identifiant et une position de l'aéronef envoyés depuis un premier aéronef (120) :

• la détermination de l'identifiant primaire (104) du secteur (108) où ledit premier aéronef (120) est situé ;
• le stockage des données de l'aéronef (122) sur un tableau (152) de la base de données (150) associé au secteur (108) ayant ledit identifiant primaire (104) ;
• le stockage supplémentaire des données de l'aéronef (122) sur chacun des tableaux (154) de la base de données (150) associés aux secteurs environnants (110) ayant un identifiant secondaire (106) correspondant audit identifiant primaire (104) ;
• l'envoi à un ou plusieurs deuxièmes aéronefs (120), par le biais de l'unité de communication (902), de données de l'aéronef stockées dans le tableau (152) associé au même secteur (108) où lesdits un ou plusieurs deuxièmes aéronefs (120) sont situés ;

- un système embarqué (1000), installé sur lesdits un ou plusieurs deuxièmes aéronefs (120), comprenant un module de communication embarqué (1002) et un module de commande embarqué (1004) configuré pour :

recevoir, par lesdits un ou plusieurs deuxièmes aéronefs (120), lesdites données de l'aéronef stockées dans le tableau (152) associé audit même secteur (108) où lesdits un ou plusieurs deuxièmes aéronefs (120) sont localisés envoyées par le serveur basé au sol (140) comportant l'identifiant et la position de l'aéronef correspondant à un autre aéronef situé sur ledit même secteur (108) et sur les secteurs environnants (110) dans la plage de distance dudit même secteur (108) ;
le calcul de la distance à chacun desdits autres aéronefs.

**10.** Système selon la revendication 9, dans lequel la communication avec l'aéronef (120) est basée sur le Protocole Internet.

**11.** Système selon la revendication 10, dans lequel l'unité de commande (904) est configurée pour envoyer les données de l'aéronef à des groupes de multidiffusion (800a, 800b) par des canaux de multidiffusion (802a, 802b), dans lequel tous les aéronefs (120) appartenant au même groupe de multidiffusion (800a, 800b) sont géographiquement situés dans le même secteur (108a, 108b), et dans lequel les données de l'aéronef pour chaque groupe de multidiffusion (800a, 800b) sont stockées dans le tableau (152a, 152b) associé au secteur (108a, 108b) du groupe de multidiffusion correspondant (800a, 800b).

Fig. 1

EP 3 273 424 B1

Latitude
[-90,90]

Longitude
[-180,180]

| (0,0) | (0,1) | (0,2) | (0,3) |
| (1,0) | (1,1) | (1,2) | (1,3) |
| (2,0) | (2,1) | (2,2) | (2,3) |
| (3,0) | (3,1) | (3,2) | (3,3) |

Fig. 2

Fig. 3

Fig. 4

Fig. 5

Fig. 6

Fig. 7A

EP 3 273 424 B1

700

| 0 | | | | | | | | | 1 | | | | | | | | | | 2 | | | | | | | | | | 3 | |
|---|---|---|---|---|---|---|---|---|---|---|---|---|---|---|---|---|---|---|---|---|---|---|---|---|---|---|---|---|---|---|
| 0 | 1 | 2 | 3 | 4 | 5 | 6 | 7 | 8 | 9 | 0 | 1 | 2 | 3 | 4 | 5 | 6 | 7 | 8 | 9 | 0 | 1 | 2 | 3 | 4 | 5 | 6 | 7 | 8 | 9 | 0 | 1 |

710

| Version | IHL | Type of Service | Total Length | | |
|---|---|---|---|---|---|
| Identification | | | Flags | Fragment Offset | |
| Time to live | | Protocol | Header Checksum | | |
| Source Address | | | | | |
| Destination Address | | | | | |
| Options | | | | Padding | |

720

| 0 | | 31 |
|---|---|---|
| Primary indentifier of current sector | | Unique ID |

722　　　　　　　　　　　　　728

| Primary indentifier | Longitude | Latitude | Unique ID |
|---|---|---|---|

722　　　　724　　　　726　　　　728

Fig. 7B

Fig. 8

EP 3 273 424 B1

120

120

122

Aircraft data

900

Communications Unit 902

140

150

Control Unit 904

Ground-based Server

Fig. 9

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012303253 A1